# EUROPEAN PATENT APPLICATION

(11) **EP 1 206 103 A2**
(43) Date of publication of application: **15.05.2002**
(21) Application number: 01307919.9
(22) Date of filing: 18.09.2001
(51) Int. Cl.: H04M 1/725, H04M 1/2745

(54) **Method for accessing information on the Internet from a mobile telephone device**

(30) Priority: 09.11.2000 GB 0027326
(71) Applicant: NCR INTERNATIONAL INC., Dayton, Ohio 45479 (US)
(72) Inventor: Woods, Sarah, Gatliff Road, London SW1W 8QR (GB)
(74) Representative: Williamson, Brian

(57) **Abstract**

A method of accessing information on the Internet from a mobile telephony device (10) such as a WAP-enabled mobile telephone comprises selecting an identifier of an Internet resource from an address book memory of the device (10) that stores a list of telephone numbers and a list of identifiers of Internet resources, and accessing the identified Internet resource in response to said selection. An Internet-enabled mobile telephony device (10) for use in the method is also disclosed.

## Description

This invention relates to accessing information via internet access terminals, and especially relates to the problems of accessing information using a mobile wireless terminal such as a WAP-enabled (Wireless Access Protocol) mobile telephone.

As the capabilities of mobile telephones grow, their user interfaces are becoming increasingly complicated and difficult for users to navigate around. Designers struggle to present multiple menu layers with any logic or clarity on the small, low-resolution displays typical of mobile telephones. Now, the advent of mobile internet access facilities such as WAP services has added substantially to the level of knowledge and learning required of the mobile telephone user. The result is that many useful facilities offered by the latest mobile telephones are left unappreciated and unused, and that theoretically attractive mobile internet access turns out, with experience, to be a disappointment. This may be one of the reasons for the poor market penetration to date of WAP-enabled mobile telephones.

At present, accessing a WAP service via a mobile telephone requires either a lengthy process of dialling a service provider and then searching through multiple application windows, or having already been through that process and having saved a bookmark as a result, accessing the WAP service via the bookmark. More specifically, the steps required of a user to access a WAP web site are:
- Go to WAP service on telephone
- Dial up service provider
- Scroll down limited list of services
- Choose service area
- Scroll down areas within lower level
- Find site required (if lucky) and access

As the number of WAP sites increases, this process will become increasingly time consuming.

The drawbacks of mobile internet access also have the effect of distorting patterns of use. As a mobile telephone screen interface allows only limited access to information and as accessing that information at mobile telephone call rates can be expensive, users typically only access information that they know they require and do not waste time browsing.

This invention proposes a time-saving alternative that also simplifies the user interface, and resides in the concept of linking the address book of a mobile telephone directly to an Internet resource such as a WAP service. More specifically, the invention contemplates using the stored address book on a mobile telephone and typed-in key words or voice commands to directly access WAP web sites, and reduces the user input required by automatically linking the address book to a web site via a service provider.

Identification of the WAP service required would be directly from the name or telephone number listed in the address book. Key words like 'SPORT' could link directly to a sports service provider whereas the name of a particular sport like 'FOOTBALL', for example, could link directly to an appropriate lower level and 'ARSENAL' could link directly to the site of Arsenal Football Club. The services can be accessed via the word in the address book or a voice command spoken by the user. If a user regularly accesses a site, scrolling down the address book of the mobile telephone to the key word is extremely convenient but even if the user is just accessing information once, typing in or speaking-in a key word to the address book is still much faster than the current method.

More conceptually, the invention resides in a method of accessing information on the Internet from a mobile telephony device, the method comprising selecting an identifier of an Internet resource from an address book memory of the device that stores a list of telephone numbers and a list of identifiers of Internet resources, and accessing the identified Internet resource in response to said selection. The invention also resides in an Internet-enabled mobile telephony device comprising an address book memory adapted to store for selection a list of telephone numbers and a list of identifiers of Internet resources, and means responsive to selection of an identifier to access the identified Internet resource. The invention extends to such a device when programmed with telephone numbers and identifiers in the address book memory.

The list of telephone numbers and the list of identifiers may be displayed for selection by navigating among the listed numbers and/or identifiers, in which case it is much preferred that the telephone numbers and the identifiers are displayed together in a common list. More preferably still, the telephone numbers and the identifiers are assigned names in the address book memory, which names may be alphabetically ordered in the common list without regard to whether they represent a telephone number or an identifier. Nevertheless, the names may be associated with indicia in the displayed list to denote whether they represent a telephone number or an identifier.

Selectio. ,n of a listed name may be by navigating a cursor around a displayed list of names or by entering a listed name by typing or speaking the name or a part thereof into or to the device. Means responsive to the selection of a listed name can then dial a telephone number or access an Internet resource appropriate to that name. If a selected listed name is associated with both a telephone number and an Internet resource, the user can be presented with a choice of telephone or Internet access.

Advantageously, confirmation of an entered listed name is displayed before the appropriate telephone number is dialled or the appropriate Internet resource is accessed.

The method of the invention may involve presenting a user with a menu of options associated with the identified Internet resource and, in accordance with the user's response, connecting the user to any of those options. In this way, the user can be offered access to whatever other levels of information may be available through the identified Internet resource and then be connected to the appropriate level.

Other aspects of the method involve tailoring the information supplied from the identified Internet resource in accordance with user location or in accordance with previous user requests.

The key advantage of the invention is the creation of a time-saving easier-to-use mobile telephone interface that affords users easy navigation and direct access to the services that they require.

In order that this invention can be more readily understood, reference will now be made, by way of example, to the accompanying drawings in which:
Figures 1 (a), (b), (c) and (d) are schematic front views of a WAP-enabled mobile telephone in accordance with this invention, showing the changing display of its user interface in a proposed new access scenario; and
Figure 2 is a flow diagram of the operation of the mobile telephone of Figure 1 and its interaction with a WAP service provider.

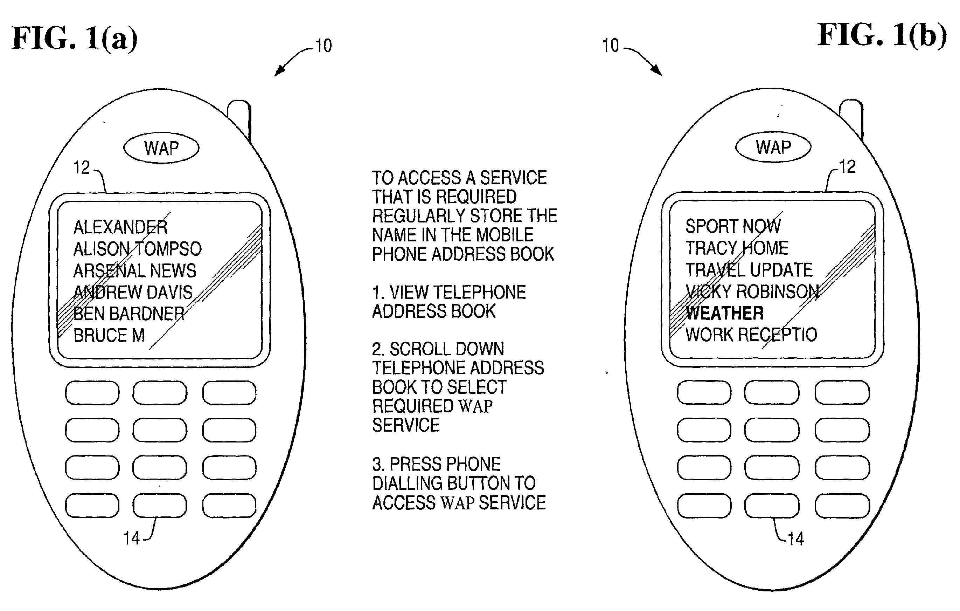

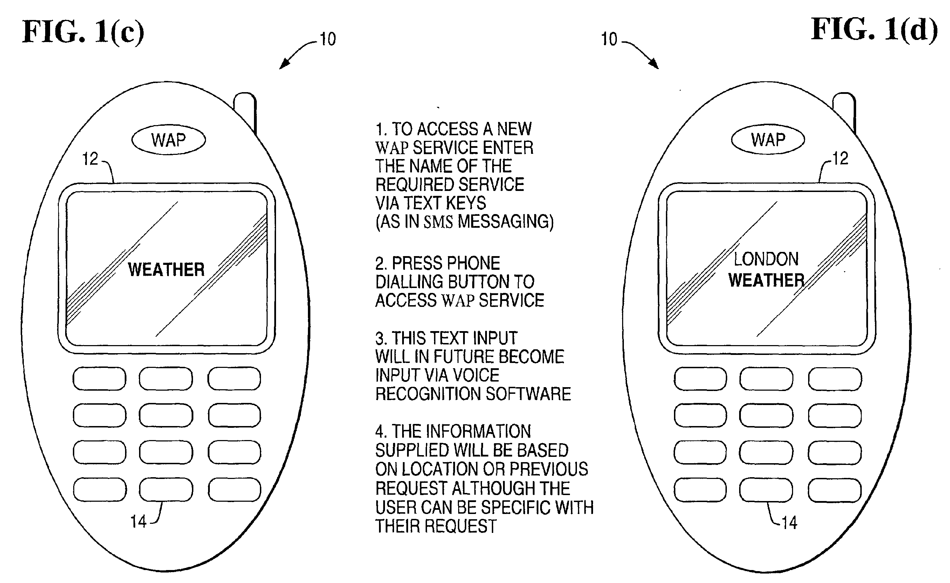

The proposed new access scenario of Figures 1(a) to 1(d) involves the use of a WAP-enabled mobile telephone 10 having a display 12 and a keypad 14. The keypad 14 has alphanumeric capabilities, as is well known.

The invention contemplates three basic access methods, which may be summarised as follows with reference to Figure 1.
Scenario 1
   - display the alphabetically-ordered address book on the display 12 of the mobile telephone 10 as shown in Figure 1(a);
   - scroll down the address book as shown in Figure 1(b) to highlight the name of the service required, in this case 'Weather'; and
   - dial, for example by pressing a dial button on the mobile telephone when the desired name has been highlighted.
Scenario 2
   - go to the address book function of the mobile telephone 10;
   - type in the site required as shown in Figure 1(c) via the alphanumeric keys of the keypad 14, for example as in SMS text messaging; and
   - dial as above.
Scenario 3
   - go to the address book function of the mobile telephone 10;
   - speak the name of the site required, causing voice recognition software within the mobile telephone to display the required name on the display 12 by way of confirmation, as shown in Figure 1(c); and
   - dial as above.

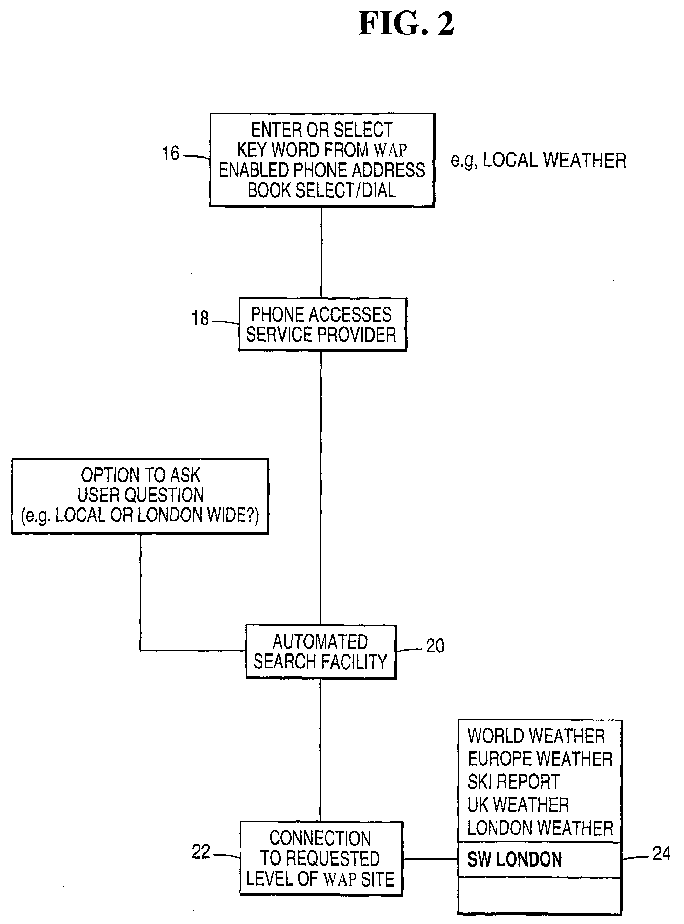

Referring now to Figure 2, this flow diagram shows the operation of the mobile telephone 10, and of the communications system to which that telephone 10 is connected, during a request for access to a particular WAP service. In this case, the desired WAP service is a weather report for South West London.

In Figure 2, the user starts at 16 by entering or selecting a key word that represents the desired WAP service in broad terms, for example 'Local Weather', and presses a dial key so that the mobile telephone 10 accesses a service provider at 18 with a request for the local weather service. An optional automated search facility at 20 associated with the service provider presents the user with any choice that may be available relating to the topic in question, such as a choice between local or London-wide weather in this instance. The user's response leads to connection at 22 to the requested level of a WAP weather site at 24.

The user's location can be inferred from the cell in which the mobile telephone 10 is operating, so that the locality to which the local weather relates can be selected and weather information downloaded to the mobile telephone 10 as appropriate. In general, the information supplied can be based on user location or upon previous requests by that user, although users can also be specific with their requests and be provided with appropriately specific information in response.

Many variations are possible within the inventive concept. In the case of names that also have associated telephone numbers, for example train enquiries or an individual with a web site, an interface choice may be given on whether to access the telephone or WAP service. Also, when the user types in the name of a desired web site, the address book function may infer the desired name from the initial characters entered by the user by, as a shortcut, suggesting on the display 12 possible names beginning with those initial characters. It is also possible for names to be wholly of partially constituted by numerals in the address book function.

In view of these and other variants, reference should be made to the accompanying claims rather than the foregoing specific description in interpreting the scope of the invention.

## Claims

1. A method of accessing information on the Internet from a mobile telephony device (10), the method comprising selecting an identifier of an Internet resource from an address book memory of the device (10) that stores a list of telephone numbers and a list of identifiers of Internet resources, and accessing the identified Internet resource in response to said selection.

2. The method of Claim 1, comprising displaying the list of telephone numbers and the list of identifiers for selection by navigating among the listed numbers and/or identifiers.

3. The method of Claim 2, comprising displaying the telephone numbers and the identifiers in a common list.

4. The method of any preceding Claim, wherein the telephone numbers and the identifiers are assigned names in the address book memory.

5. The method of Claim 4, comprising selecting a listed name by navigating a cursor around a displayed list of names or by entering a listed name by typing or speaking the name or a part thereof into or to the device (10), and responding to selection of a listed name by dialling a telephone number or accessing an Internet resource appropriate to that name.

6. The method of Claim 5, comprising displaying confirmation of an entered listed name before dialling the appropriate telephone number or accessing the appropriate Internet resource.

7. The method of Claim 5 or Claim 6, comprising presenting a user with a choice of telephone or Internet access if a selected listed name is associated with both a telephone number and an Internet resource.

8. The method of any preceding Claim, comprising presenting a user with a menu of options associated with the identified Internet resource and, in accordance with the user's response, connecting the user to any of those options.

9. The method of any preceding Claim, comprising tailoring the information supplied from the identified Internet resource in accordance with user location.

10. The method of any preceding Claim, comprising tailoring the information supplied from the identified Internet resource in accordance with previous user requests.

11. An Internet-enabled mobile telephony device (10) comprising an address book memory adapted to store for selection a list of telephone numbers and a list of identifiers of Internet resources, and means responsive to selection of an identifier to access the identified Internet resource.

12. The device (10) of Claim 11, comprising a display (12) for displaying the list of telephone numbers and the list of identifiers for selection, and a navigating device for navigating a cursor among the listed numbers and/or identifiers on the display.

13. The device (10) of Claim 12, comprising means (12) for displaying the telephone numbers and the identifiers on the display in a common list.

14. The device (10) of any of Claims 11 to 13, wherein the address book memory includes means for storing names assigned to the numbers and the identifiers.

15. The device (10) of Claim 14, comprising means (14) for entering a listed name by typing or speaking the name or a part thereof, and means responsive to selection of a listed name by dialling a telephone number or accessing an Internet resource appropriate to that name.

16. The device (10) of Claim 14 or Claim 15, comprising means responsive to selection of a listed name associated with both a telephone number and an Internet resource to present a user with a choice of telephone or Internet access.

17. The device (10) of any of Claims 11 to 16, when programmed with telephone numbers and identifiers in the address book memory.
